(19) **Europäisches Patentamt / European Patent Office / Office européen des brevets**

(11) **EP 1 570 021 B1**

(12) **EUROPÄISCHE PATENTSCHRIFT**

(45) Veröffentlichungstag und Bekanntmachung des Hinweises auf die Patenterteilung:
**25.03.2009   Patentblatt 2009/13**

(21) Anmeldenummer: 03789177.7

(22) Anmeldetag: **09.12.2003**

(51) Int Cl.:
*C09K 3/14* (2006.01)    *B24D 11/00* (2006.01)

(86) Internationale Anmeldenummer:
**PCT/EP2003/013911**

(87) Internationale Veröffentlichungsnummer:
**WO 2004/053013 (24.06.2004 Gazette 2004/26)**

(54) **SCHLEIFMITTEL MIT VERBESSERTEN SCHLEIFEIGENSCHAFTEN**

ABRASIVE WITH IMPROVED ABRASIVE PROPERTIES

PRODUIT ABRASIF PRESENTANT DES CARACTERISTIQUES D'ABRASION AMELIOREES

(84) Benannte Vertragsstaaten:
**AT DE FR GB IT**

(30) Priorität: **10.12.2002   DE 10257554**

(43) Veröffentlichungstag der Anmeldung:
**07.09.2005   Patentblatt 2005/36**

(73) Patentinhaber: **Treibacher Schleifmittel GmbH**
**79725 Laufenburg (DE)**

(72) Erfinder:
- **ZEIRINGER, Hans**
  **A-8321 Kappeln (AT)**
- **WURZER, Thomas**
  **A-9220 Velden (AT)**

(74) Vertreter: **Neunert, Peter Andreas**
**Patentanwälte**
**Westphal, Mussgnug & Partner**
**Am Riettor 5**
**78048 Villingen-Schwenningen (DE)**

(56) Entgegenhaltungen:
**EP-A- 0 532 261          US-A- 5 702 811**

- **PATENT ABSTRACTS OF JAPAN Bd. 0150, Nr. 31 (C-0798), 24. Januar 1991 (1991-01-24) & JP 2 269790 A (NORITAKE CO LTD), 5. November 1990 (1990-11-05)**

**Beschreibung**

Die vorliegende Erfindung betrifft Schleifkörner aus der Gruppe der konventionellen Schleifkörner, die geschmolzene oder gesinterte Korunde, Zirkonkorunde, Siliziumcarbide und Borcarbid umfasst, für den Einsatz in kunstharzgebundenen Schleifmitteln, wobei die Schleifkörner dadurch gekennzeichnet sind, dass sie oberflächlich mit einer Ummantelung, bestehend aus 0,05 bis 2,0 Gew.-%, bezogen auf das Gewicht des unbehandelten Schleifkorns, eines wässerigen Bindemittels auf Silikatbasis und 0,05 bis 5,0 Gew.-%, ebenfalls bezogen auf das Gewicht des unbehandelten Schleifkorns, einer komplexen, feinkörnigen Oxidverbindung der allgemeinen Formel $A_xB_yO_z$, versehen sind, wobei es sich bei A und B jeweils um eine Gruppe von Elementen handelt und bei O um Sauerstoff, der im stöchiometrischen Verhältnis zu A und B vorliegt, und wobei die Zahlen x, y und z die Zusammensetzung der komplexen Oxide kennzeichnen und nicht auf ganze Zahlen beschränkt sind und z einem Produkt aus der Summe von (x+y) und einem Faktor zwischen 1.5 und 2.5 entspricht. Bei der Gruppe von Elementen A handelt es sich um die Gruppe der Metalle im Periodensystem der Elemente, während es sich bei der Gruppe von Elementen B um die Gruppe der amphoteren Elemente im Periodensystem handelt. Die komplexe feinkörnige Oxidverbindung $A_xB_yO_z$ enthält mindestens jeweils ein Element aus der Gruppe der Metalle bzw. aus der Gruppe der amphoteren Elemente des Periodensystems. Bei dem wässerigen Bindemittel auf Silikatbasis handelt es sich bevorzugt um kolloidale Kieselsäure. Die vorliegende Erfindung betrifft darüber hinaus ein Verfahren zur Herstellung der o. g. Schleifkörner sowie ihre Verwendung in kunstharzgebundenen Schleifmitteln.

Schleifmittelkörnungen werden in den unterschiedlichsten Korngrößen in gebundener und loser Form für verschiedenartigste Schleifprozesse eingesetzt. So werden sie beispielsweise in einer Mischung mit keramischen Massen oder Kunstharz zu Schleifscheiben geformt, wobei die keramischen Massen oder Kunstharz als Binder für das Schleifkorn dienen. Bei den Schleifmitteln auf Unterlagen (Papier, Leinen etc.) wird die Haftung auf der Unterlage in der Regel über Kunstharzbindungen realisiert. Die Leistungsfähigkeit der verschiedenen Schleifmittel wird nun nicht allein vom eingesetzten Schleifkorn, sondern im hohen Maße auch von der Einbindung des Korns im Schleifmittel beeinflusst. Eine besondere Bedeutung kommt dabei der Grenzfläche zwischen Schleifkorn und Binderphase zu. Diese bestimmt die Kraft, die erforderlich ist, um ein Schleifkorn aus einer Bindung herauszubrechen. Je härter und standfester ein Schleifkorn ist, desto größer sind auch die Anforderungen an die Bindung und die Haftkräfte an den Grenzflächen und um so leichter wird ein Korn aus der Bindung herausgelöst. Die meisten Schleifkörnungen, insbesondere diejenigen, die durch einen Schmelzprozess hergestellt werden, besitzen eine relativ glatte Oberfläche, was sich für die Einbindung, die überwiegend auf Adhäsion beruht, als nachteilig erweist. Dies gilt besonders für kunstharzgebundene Schleifmittel, bei denen die Bindung nahezu ausschließlich auf Adhäsion beruht. In der Vergangenheit wurden daher bereits eine Vielzahl von Maßnahmen zur Aufrauung bzw. Vergrößerung der Oberfläche und damit zur Verbesserung der Einbindung vorgeschlagen.

Die US 2,527,044 und die US 2,541,658, von denen die Erfindung ausgeht, beschreiben die Behandlung von konventionellen Schleifkörnern mit einem wässerigen Bindemittel und feinkörnigen Oxiden zur Vergrößerung der Kornoberfläche, wodurch eine Verbesserung der Einbindung in kunstharzgebundenen Schleifmitteln erreicht werden soll.

So wird in der US 2,527,044 ein geschmolzenes Aluminiumoxid- und Siliziumcarbidschleifkorn beschrieben, das zur Verbesserung der Einbindung in kunstharzgebundenen Schleifmitteln mit einem matten Überzug aus feinkörnigen Metalloxidpartikeln, beispielsweise Eisen-III-Oxid oder Molybdänoxid, überzogen wird. Die Metalloxidpartikel haften mittels einer dünnen glasartigen Schicht an der Oberfläche des Korns.

Die US 2,541,658 beschreibt die Ummantelung von Schleifkörnungen mit Metaphosphaten und Eisenoxidpigmenten, welche die Einbindung des Korns in der Papier- und Leinenanwendung und gleichzeitig die Wasserbeständigkeit der Schleifmittel verbessern sollen.

Darüber hinaus wird in der EP-A-0 014 236 die Behandlung von Schleifkorn auf Basis von Aluminiumoxid, das einen Anteil an Titanoxid aufweist, beschrieben, wobei auf das Schleifkorn eine Schicht aus einer keramischen Masse, wie z.B. Tone, Kaolin oder Glasfritten, aufgeschmolzen oder aufgesintert wird. Gleichzeitig mit dem Aufsintern oder Aufschmelzen der Ummantelung erfolgt eine Umwandlung des im Korund enthaltenen Titanoxids von der 3-wertigen in die 4-wertige Oxidationsstufe, die mit einer Umwandlung der Struktur des Schleifkorns einhergeht.

Die EP-B-0 080 604 schließlich beschreibt eine keramische Ummantelung zur Verbesserung der Schleifleistung beim Nassschleifen, wobei die keramische Ummantelung aus einer Glasfritte, einem Bindemittel und einem schleifaktiven Feinkorn besteht.

Die Kornbehandlungen gemäß den oben genannten Patenten, insbesondere die Behandlung nach der US 2,541,658, haben trotz erkannter Mängel Eingang in der Industrie gefunden. Aus Kostengründen erlangte dabei die Behandlung mit Eisenoxidpigment ($Fe_2O_3$) zur Vergrößerung der Kornoberflächen von Schleifkörnern für den Einsatz in kunstharzgebundenen Schleifmitteln besondere Bedeutung. Der Nachteil dieser Behandlung besteht jedoch darin, dass bei hoher Beanspruchung und starker Erwärmung des Korns während der Schleifoperation die Haftung des Korns in der Bindung nachlässt und das Korn aus der Bindung herausbricht. Eine Erklärung für dieses Verhalten ist möglicherweise darin zu suchen, dass das Eisen-III-Oxid thermisch zum Eisen-II-Oxid zersetzt wird. Durch die damit verbundene Volumenveränderung und den frei werdenden Sauerstoff wird die Bindung zum Kunstharz geschädigt und das Ausbrechen des Korns begünstigt. Entsprechend gering ist die Standzeit bzw. die Abtragsleistung des Schleifmittels.

Das Aufbringen keramischer Massen nach der EP-A-0 014 236 ist auf Titanoxid-haltige Korunde beschränkt und bedingt zusätzlich die Anwendung hoher Temperaturen. Ein Nachteil ist, dass bei diesen Temperaturen häufig stabile Kornagglomerate gebildet werden, die sich nur noch schwer zerstören lassen. Dadurch verringert sich entweder die Ausbeute an Schleifkörnung in der gewünschten Partikelgrößenverteilung oder das so erhaltene Gemisch muss einem zusätzlichen personal- und damit kostenaufwendigen Zerkleinerungsschritt unterworfen werden. Außerdem erhalten die behandelten Körnungen meist nur eine geringfügig vergrößerte Oberfläche, da bei den hohen Temperaturen das aufgebrachte Feinkorn mit dem Bindemittel zu einem glasartigen Überzug verschmilzt.

Bei der Ummantelung mit schleifaktivem Feinkorn nach dem EP-B-0 080 604 ist es schwierig, die vorgesehenen Feinkornpartikel fest an die Oberfläche der Schleifkörner zu binden.

Auch handelt es sich bei den vorgesehenen Feinkornpartikeln um schleifaktive Stoffe, die mit einer Glasfritte verschmolzen sind und dabei eine möglichst glatte Oberfläche bilden sollen, so dass auch hier die spezifische Oberfläche des Schleifkorns nur geringfügig vergrößert wird.

Aufgabe der Erfindung ist es, ein ummanteltes Schleifkorn mit vergrößerter Oberfläche zur Verfügung zu stellen, das sich auch bei starker mechanischer und thermischer Beanspruchung, beispielsweise in kunstharzgebundenen Trennscheiben, gut und dauerhaft einbinden lässt und somit die beschriebenen Nachteile des Standes der Technik nicht aufweist. Damit verbunden ist eine bessere Nutzung der Korneigenschaften, die sich zusätzlich zum geringeren Kornausbruch in einer erkennbaren Verbesserung der Schleifleistung dokumentiert.

Überraschend konnte das angestrebte Ziel dadurch erreicht werden, dass Schleifkörnungen auf Basis geschmolzener oder gesinterter Korunde, Zirkonkorunde, Siliziumcarbid und Borcarbid zuerst in einem Mischer mit 0,05 - 2,0 Gew-% mit einer wässerigen Silikatlösung, vorzugsweise kolloidale Kieselsäure, benetzt und darauffolgend mit 0,05 - 5, 0 Gew.-%, jeweils bezogen auf die Masse des Ausgangskorns, einer komplexen feinkörnigen Oxidverbindung der allgemeinen Formel $A_xB_yO_z$ ummantelt werden, wobei es sich bei A und B jeweils um eine Gruppe von Elementen und bei O um Sauerstoff handelt, der im stöchiometrischen Verhältnis zu A und B vorliegt, und wobei die Zahlen x, y und z die Zusammensetzung der komplexen Oxide kennzeichnen und nicht auf ganze Zahlen beschränkt sind und z einem Produkt aus der Summe von (x+y) und einem Faktor zwischen 1.5 und 2.5 entspricht. Bei der Gruppe von Elementen A handelt es sich dabei um die Gruppe der Metalle im Periodensystem der Elemente, während es sich bei der Gruppe von Elementen B um die Gruppe der amphoteren Elemente im Periodensystem der Elemente handelt. Die komplexe feinkörnige Oxidverbindung der allgemeinen Formel $A_xB_yO_z$, enthält mindestens ein Element A aus der Gruppe der Metalle im Periodensystem der Elemente und mindestens ein Element B aus der Gruppe der amphoteren Elemente sowie Sauerstoff im stöchiometrischen Verhältnis zu A und B. In Abhängigkeit von der Temperaturbeständigkeit des zu ummantelnden Schleifkorns ist im Anschluss an die Ummantelung eine Wärmebehandlung zwischen 100 und 900 °C zur Verbesserung der Haftung Ummantelung vorgesehen.

Im Vergleich zu anderen ähnlich feinkörnigen Materialien, die dem Stand der Technik entsprechend zur Vergrößerung der Oberfläche und zur Verbesserung der Einbindung eingesetzt werden, ist der positive Effekt der erfindungsgemäßen feinkörnigen komplexen Oxide auf die Einbindung des Schleifkorns und damit auf die Schleifleistung des Schleifmittels wesentlich ausgeprägter, was auch anhand von Beispielen später ausführlicher erläutert wird. Eine Erklärung für diesen positiven Effekt ist somit nicht allein in der Vergrößerung der Oberfläche der Schleifmittelkörnungen durch die komplexe, feinkörnige Oxidverbindung, die über den silikatischen Binder gut an der Oberfläche des Korns haftet und die besondere Oberflächenstruktur an den Körnern, welche die mehrheitlich durch Adhäsion bedingten Haftkräfte zum Kunstharz vergrößert, zu suchen. Die erfindungsgemäßen, komplexen, feinkörnigen Oxidverbindungen sind darüber hinaus thermodynamisch sehr stabil und dadurch reaktionsträge. Während eines Schleifprozesses mit hoher mechanischer bzw. thermischer Kornbeanspruchung finden nahezu keine Zersetzung oder Reaktionen mit dem zu schleifenden Werkstoff oder dem Schleifkorn statt. Die Ursache dafür ist möglicherweise die spezielle Oxidzusammensetzung zwischen metallischen und amphoteren Elementen. Ein weiterer Vorteil ergibt sich aus der guten Benetzung sowohl des Schleifkorns als auch der komplexen Oxidverbindung durch das silikatische Bindemittel bevorzugt durch kolloidale Kieselsäure. Verbunden mit einer auf die thermische Stabilität des Korns abgestimmten Wärmebehandlung des ummantelten Korns ergibt sich eine optimale Haftung der komplexen Oxidverbindung.

Korunde, Siliciumcarbide und Borcarbid können zum Einbrennen der Ummantelung ohne nennenswerte Veränderung der Grundsubstanz bis zu ca. 900 °C eine Stunde lang erhitzt werden. Eine Ausnahme bildet der eutektische Zirkonkorund, der oberhalb von ca. 600 °C aufgrund einer dem Produkt eigenen überproportionalen thermischen Dehnung zerfällt. Dieses Produkt sollte deshalb zum Einbrennen der Ummantelung nicht höher als 500 °C erhitzt werden. Überraschend hat sich gezeigt, dass diese Temperatur ausreicht, um die gewünscht gute Haftung der Ummantelung am Korn zu gewährleisten und eine deutlich verbesserte Schleifleistung zu erzielen.

Die Einbindung der ummantelten Schleifkörner und die damit verbundene Verbesserung der Schleifleistung wurde in kunstharzgebundenen Trennscheiben getestet. Bei Trennversuchen wird das einzelne Korn überdurchschnittlich stark belastet und erhitzt und somit auch die Grenzfläche des Korns zum Kunstharz extrem stark beansprucht, so dass anhand solcher Versuche die Wirksamkeit der erfindungsgemäßen Ummantelung besonders deutlich aufgezeigt werden kann.

Im folgenden soll die Erfindung anhand von Beispielen näher erläutert werden, ohne dass darin eine Einschränkung zu sehen ist.

**Beispiele**

**Trennscheibenfertigung**

**Halbedelkorund FRSK von Treibacher Schleifmittel in der Korngröße F36 nach FEPA**

Für jeweils 5 Trennscheiben werden zuerst 780 g Schleifkorn mit 55 g Flüssigharz (Phenolharz) vermischt und dieses Gemisch wurde anschließend mit 240 g einer Pulvermischung, bestehend aus 50,0 Gew.-% Phenol-Pulverharz, 25,0 Gew.-% Kryolith, 24,0 Gew.-% Pyrit und 1,0 Gew.-% CaO, versetzt. Danach wurde ein entsprechender Anteil der Mischung jeweils zu Scheiben mit einem Durchmesser von 178 mm und eine Stärke von 2,8 mm verpresst und innerhalb von 14 Stunden bei 180 °C ausgehärtet.

**Trennscheibenfertigung**

**Eutektischer Zirkonkorund ZK40 von Treibacher Schleifmittel in der Korngröße F36 nach FEPA**

Im Unterschied zu dem FRSK-Korn wird beim ZK40 zu 780 g Schleifkorn 65 g Flüssigharz und 260 g der oben beschriebenen Pulvermischung zugesetzt.

**Testparameter bei den Trenntest:**

- 20 Schnitte / Trennscheibe
- Werkstoffe: Flachstahl ST 37, 30x8 mm (für FRSK)
  Rundstahl V2A (18 % Cr, 10 % Ni), $\varnothing$ 20 mm (für ZK40)
- Zeit / Schnitt: 3.5 s (FRSK). 5.5 s (ZK40)
- Berechnung des G-Faktors nach 20 Schnitten nach (Durchschnittswert der 5 Scheiben) nach:

$$\frac{\text{getrennte Fläche des Werkstoffes}}{\text{Flächenverlust der Trennscheibe}} = \text{G-Faktor}$$

**Beispiel 1 (Vergleichsbeispiel)**

5,0 kg Halbedelkorund FRSK F36 (Korngröße nach FEPA, Federation Europeenne des Fabricants de Produits Abrasifs) von Treibacher Schleifmittel wurden im Labor-Intensivmischer zuerst mit 0,3 Gew.-% MAPL (50 %-ige, wässrige Monoaluminiumphospatlösung der Chemischen Fabrik Budenheim), bezogen auf die Masse des unbehandelten Korns, benetzt und nach einer zusätzlichen Mischzeit von ca. 3 Minuten mit 1.2 Gew.-% Bayferrox 222 (synthetisches Eisenoxidpigment, $Fe_2O_3$ von Bayer AG), bezogen auf die Masse des unbehandelten Korns, ummantelt. Nach einer weiteren Mischzeit von 2 Minuten wurde das ummantelte Korn eine Stunde lang bei 800 °C gebrannt.

Mit dem ummantelten Halbedelkorundkorn wurden in der oben beschriebenen Weise fünf Trennscheiben gefertigt und diese auf Normal-Flachstahl getestet. Der ermittelte G-Faktor ist aus der nachfolgenden Tabelle 1 zu entnehmen.

**Beispiel 2 (Erfindung)**

5,0 kg Halbedelkorund FRSK F36 wurden mit 0,2 Gew.-% kolloidaler Kieselsäure (LUDOX HS 30 von Du Pont) benetzt und nach einer zusätzlichen Mischzeit von 3 Minuten mit 0,2 Gew.-% Titan-Mangan-Antimonrutil (Pigment PK12100 von Ferro Corp.) mit einer ungefähren Zusammensetzung von 10 Gew.-% $MnO_2$, 24 Gew.-% $Sb_2O_3$ und 66

Gew.-% $TiO_2$ ummantelt. Nach einer weiteren Mischzeit von 2 Minuten wurde das Korn eine Stunde bei 800 °C gebrannt und anschließend zu Trennscheiben verarbeitet.

Die Ergebnisse der Trenntests auf Normalstahl sind ebenfalls aus der Tabelle 1 zu entnehmen.

**Tabelle 1**

| Versuchsbeispiele (Trennscheiben) | G-Faktor |
|---|---|
| FRSK, F36, unbehandelt | 11 |
| FRSK, F36, Beispiel 1 | 13 |
| FRSK, F36, Beispiel 2 | 16 |

Die Ergebnisse der Trenntests zeigen, dass sich mit der erfindungsgemäßen Ummantelung von FRSK-Korn eine deutliche Verbesserung der Schleifleistung im Vergleich zu einem unbehandelten bzw. einem entsprechend dem Stand der Technik behandelten Korn erzielen lässt.

**Beispiel 3 (Vergleichsbeispiel)**

5,0 kg eutektischer Zirkonkorund ZK 40 F36 wurde wie in Beispiel 1 mit MAPL und Bayferrox 222 ummantelt und das Korn anschließend bei 400 °C wärmebehandelt. Aus dem Produkt wurden Trennscheiben gefertigt.

Das Ergebnis der Trenntests auf Rostfrei-Stahl ist aus der Tabelle 2 zu entnehmen.

**Beispiel 4 (Vergleichsbeispiel)**

5,0 kg eutektischer Zirkonkorund ZK 40 F36 wurde im Laborintensivmischer anders als in Beispiel 3 zuerst mit 0,2 Gew.-% MAPL angefeuchtet und nach einer zusätzlichen Mischzeit von 3 Minuten mit 0,2 Gew.-% Bayferrox ummantelt. Die Wärmebehandlung des ummantelten Korns erfolgte eine Stunde bei 400 °C.

Das Ergebnisse der Trenntests der mit dem Korn gefertigten Trennscheiben sind in der Tabelle 2 wiedergegeben.

**Beispiel 5 (Vergleichsbeispiel)**

5,0 kg eutektischer Zirkonkorund ZK 40 F36 wurden im Laborintensivmischer mit 0,2 Gew.-% kolloidaler Kieselsäure (Ludox HS30) angefeuchtet und nach einer zusätzlichen Mischzeit von 3 Minuten mit 0,2 Gew.-% Titanoxidpigment ummantelt. Nach einer weiteren Mischzeit von 2 Minuten erfolgte die Wärmebehandlung bei 400 °C. Aus dem ummantelten Korn wurden in der oben beschriebenen Weise Trennscheiben gefertigt, die dann schleiftechnisch geprüft wurden.

Die Testergebnisse sind in der Tabelle 2 wiedergegeben.

**Beispiel 6 (Erfindung)**

5,0 kg eutektischer Zirkonkorund ZK 40 F36 wurden wie im Beispiel 2 zuerst mit kolloidaler Kieselsäure angefeuchtet und danach mit Titan-Mangan-Antimonrutil ummantelt. Die Wärmebehandlung erfolgte über eine Stunde bei 400 °C. Die Fertigung der Trennscheiben erfolgte in der oben beschriebenen Weise.

Die Ergebnisse der Trenntests sind in der Tabelle 2 wiedergegeben.

**Beispiel 7 (Erfindung)**

5,0 kg eutektischer Zirkonkorund ZK 40 F36 wurden im Laborintensivmischer zuerst mit 0,2 Gew.-% kolloidaler Kieselsäure benetzt und nach einer zusätzlichen Mischzeit von 3 Minuten mit einem Chrom-Eisen-Mangan-Nickelmischoxid (D 24148 Schwarzpigment von Degussa) ummantelt. Nach einer weiteren Mischzeit von 2 Minuten wurde das ummantelte Korn eine Stunde bei 400 °C wärmebehandelt und danach zu Trennscheiben verarbeitet.

Die Ergebnisse der Trenntests sind in der Tabelle 2 wiedergegeben.

**Tabelle 2**

| Versuchsbeispiele (Trennscheiben) | G-Faktor |
|---|---|
| ZK40 F36, unbehandelt | 18,5 |
| ZK40 F36, Beispiel 3 (Vergleich) | 18,0 |
| ZK40 F36, Beispiel 4 (Vergleich) | 19,0 |
| ZK40 F36, Beispiel 5 (Vergleich) | 22,5 |
| ZK40 F36, Beispiel 6 (Erfindung) | 27,4 |
| ZK40 F36, Beispiel 7 (Erfindung) | 26,8 |

Aus den Ergebnissen in der Tabelle 2 ist ersichtlich, dass mit dem erfindungsgemäß ummantelten eutektischen Zirkonkorund eine deutliche Leistungssteigerung beim Trennschleifen im Vergleich zu einem unbehandeltem oder herkömmlich behandelten Zirkonkorund-Schleifkorn erreicht werden kann.


**Patentansprüche**

1.  Schleifkörner aus der Gruppe der konventionellen Schleifkörner, die insbesondere geschmolzene oder gesinterte Korunde, Zirkonkorunde, Siliziumcarbide und Borcarbid umfasst, wobei die Schleifkörner mit einer Ummantelung, bestehend aus 0,05 - 2,0 Gew.-% eines wässerigen Bindemittels und 0,05 - 5,0 Gew.-% einer komplexen feinkörnigen Oxidverbindung, versehen sind, **dadurch gekennzeichnet, dass** die komplexe feinkörnige Oxidverbindung die allgemeine Zusammensetzung $A_xB_yO_z$ besitzt und es sich bei $A_x$ und $B_y$ jeweils um eines oder mehrere Elemente aus einer Gruppe von Elementen A, wobei es sich um die Gruppe der Metalle bestehend aus Titan, Zirkon, Eisen, Kobalt und Nickel handelt, bzw. einer zweiten Gruppe von Elementen B, wobei es sich um die Gruppe der amphoteren Elemente bestehend aus Vanadium, Chrom, Mangan, Zink, Zinn und Antimon handelt, und bei $O_z$ um Sauerstoff handelt, der im stöchiometrischen Verhältnis zu $A_x$ und $B_y$ vorliegt, wobei es sich bei x und y um natürliche Zahlen > 0 handelt und z einem Produkt aus der Summe von (x+y) und einem Faktor zwischen 1.5 und 2.5 und entspricht.

2.  Schleifkörner gemäß Anspruch 1, **dadurch gekennzeichnet, dass** als Bindemittel ein silikatischer Binder eingesetzt wird.

3.  Schleifkörner gemäß Anspruch 2, **dadurch gekennzeichnet, dass** als silikatischer Binder kolloidale Kieselsäure eingesetzt wird.

4.  Schleifkörner gemäß einem oder mehreren der Ansprüche 1 bis 3, **dadurch gekennzeichnet, dass** die Ummantelung bevorzugt 0,1 - 2,0 Gew.-%, bezogen auf die Masse des unbehandelten Korns, einer komplexen, feinkörnigen Oxidverbindung aufweist.

5.  Schleifkörner gemäß einem oder mehreren der Ansprüche 1 bis 4, **dadurch gekennzeichnet, dass** der Bindemittelanteil bevorzugt 0,1 - 1,0 Gew.-%, bezogen auf die Masse des unbehandelten Korns, beträgt.

6.  Verfahren zur Behandlung von Schleifkörnern gemäß einem oder mehreren der vorangegangenen Ansprüche, **dadurch gekennzeichnet, dass** die Schleifkörner

    i) in einem ersten Schritt in einem Mischer mit einem flüssigen silikatischen Bindemittel benetzt werden,
    ii) die benetzten Schleifkörner danach in einem zweiten Schritt mit einer komplexen, feinkörnigen Oxidverbindung mit der allgemeinen Formel $A_xB_yO_z$ versetzt und solange vermischt werden, bis die komplexe feinkörnige Oxidverbindung gleichmäßig auf der Oberfläche der Schleifkörner verteilt ist, und
    iii) schließlich in einem dritten Schritt die so ummantelten Schleifkörner zur besseren Haftung der Ummantelung einer Wärmebehandlung unterzogen werden.

7.  Verfahren gemäß Anspruch 6, **dadurch gekennzeichnet, dass** die Mischzeiten in Schritt i) und ii) jeweils zwischen 0.5 und 5 Minuten betragen.

8.  Verfahren gemäß Anspruch 6 oder 7, **dadurch gekennzeichnet, dass** die Wärmebehandlung bei Temperaturen zwischen 100 und 900 °C durchgeführt wird.

9. Kunstharzgebundene Schleifmittel, wie z.B. Schleifbänder, Schleifpapiere und Schleifscheiben, bestehend aus Schleifkörnern gemäß einem oder mehreren der Ansprüche 1 bis 5.

**Claims**

1. Abrasive grains out of the group of conventional abrasive grains, particularly comprising molten or sintered corundums, zircon corundum, silicon carbides and boron carbide, the abrasive grains being provided with a coating consisting of 0.05 - 2.0 % by weight of an aqueous binder and of 0.05 to 5.0 % by weight of a complex fine-grained oxide compound, **characterized in that** the complex fine-grained oxide compound has the general composition $A_xB_yO_z$ and **in that** $A_x$ and $B_y$ are each one or more elements of a group of elements A, this being the group of metals consisting of titanium, zircon, iron, cobalt and nickel, or of a second group of elements B, this being the group of amphoteric elements consisting of vanadium, chromium, manganese, zinc, tin and antimony, and wherein $O_z$ is oxygen present at a stoichiometric ratio of $A_x$ and $B_y$, with x and y being natural numbers > 0 and z corresponding to the product of the sum of (x+y) and a factor between 1.5 and 2.5 and [sic].

2. The abrasive grains as claimed in Claim 1, **characterized in that** a siliceous binder is used as a binder.

3. The abrasive grains as claimed in Claim 2, **characterized in that** a colloidal silicic acid is used as a siliceous binder.

4. The abrasive grains as claimed in any one or more of Claims 1 to 3, **characterized in that** the coating preferably includes 0.1 to 2.0 % by weight, in relation to the mass of the untreated grain, of a complex fine-grained oxide compound.

5. The abrasive grains as claimed in any one or more of Claims 1 to 4, **characterized in that** the proportion of binder is preferably 0.1 to 1.0 % by weight in relation to the mass of the untreated grain.

6. A method of treating abrasive grains as claimed in any one or more of the preceding claims, **characterized in that**

   i) in a first step, the abrasive grains are wetted in a mixer by means of a liquid siliceous binder,
   ii) in a second step, a complex, fine-grained oxide compound having the general formula $A_xB_yO_z$ is added to the wetted abrasive grains which are subsequently mixed together until the complex fine-grained oxide compound is evenly distributed over the surface of the abrasive grains; and
   iii) in a third step, the abrasive grains thus coated are finally subjected to a heat treatment in order to enhance the adhesion of the coating.

7. The method as claimed in Claim 6, **characterized in that** the mixing times in steps i) and ii) are each between 0.5 and 5 minutes.

8. The method as claimed in Claim 6 or 7, **characterized in that** the heat treatment is carried out at temperatures between 100 and 900°C.

9. Synthetic resin-bound abrasive means such as, for example, abrasive belts, abrasive paper and abrasive discs, consisting of abrasive grains as claimed in any one or more of Claims 1 to 5.

**Revendications**

1. Grains abrasifs du groupe des grains abrasifs classiques comprenant notamment le corindum fondu ou fritté, le zircon-corindum, le carbure de silicium et le carbure de bore, les grains abrasifs ayant une enveloppe composée de 0,05 % - 2,0 % en poids d'un liant aqueux et de 0,05 % - 5,0 % en poids d'une combinaison complexe d'oxydes à grains fins,
   **caractérisés en ce que**
   la combinaison complexe d'oxydes à grains fins possède la composition générale $A_xB_yO_z$ dont $A_x$ et $B_y$, représentent chaque fois de l'un ou de plusieurs des éléments d'un groupe d'éléments A, qui est celui des métaux comprenant les titane, zirconium, fer, cobalt et nickel ou d'un second groupe d'éléments B comprenant des éléments amphotères composés du vanadium, chrome, manganèse, zinc, étain, antimoine et $O_z$ étant de l'oxygène disponible selon le rapport stoechiométrique de $A_x$ et de $B_y$, x et y étant des naturels entiers supérieurs à 0 et z étant le produit de la somme de (x+y) et d'un coefficient compris entre 1,5 et 2,5.

**2.** Grains abrasifs selon la revendication 1,
**caractérisés en ce que**
le liant est à base de silicate.

**3.** Grains abrasifs selon la revendication 2,
**caractérisés en ce que**
le liant à base de silicate utilise de l'acide silicique colloïdal.

**4.** Grains abrasifs selon une ou plusieurs des revendications 1 à 3,
**caractérisés en ce que**
l'enveloppe représente de préférence entre 0,1 % et 2,0 % en poids de la masse de graines non traitées d'une combinaison complexe d'oxydes à grains fins.

**5.** Grains abrasifs selon une ou plusieurs des revendications 1 à 4,
**caractérisés en ce que**
le liant représente de préférence entre 0,1 % et 1,0 % en poids de la masse des grains non traités.

**6.** Procédé de traitement de grains abrasifs selon une ou plusieurs des revendications précédentes,
**caractérisé en ce que**

i) dans une première étape, on mouille les grains abrasifs dans un mélangeur avec un liant liquide,
ii) ensuite, au cours d'une seconde étape, les grains abrasifs mouillés sont assemblés à une combinaison d'oxydes à grains plus fins ayant la formule générale $A_xB_yO_z$ et ils seront mélangés jusqu'à ce que la combinaison complexe d'oxydes à grains fins, soit répartie régulièrement à la surface des grains abrasifs, et
iii) finalement dans une troisième étape, on soumet les grains abrasifs ainsi revêtus à un traitement thermique pour mieux accrocher l'enveloppe.

**7.** Procédé selon la revendication 6,
**caractérisé en ce que**
les durées de mélange dans l'étape i) et ii) sont comprises chacune entre 0,5 et 5 minutes.

**8.** Procédé selon la revendication 6 ou 7,
**caractérisé en ce que**
le traitement thermique est effectué à des températures comprises entre 100°C et 900°C.

**9.** Agent abrasif lié par de la résine de synthèse telle que ruban abrasif, papier abrasif ou disque abrasif composée de grains fins selon une ou plusieurs des revendications 1 à 5.

**IN DER BESCHREIBUNG AUFGEFÜHRTE DOKUMENTE**

**In der Beschreibung aufgeführte Patentdokumente**

- US 2527044 A
- US 2541658 A
- EP 0014236 A
- EP 0080604 B